(19) Europäisches Patentamt
European Patent Office
Office européen des brevets

(11) EP 2 508 482 A1

# (12) EUROPEAN PATENT APPLICATION

(43) Date of publication:
**10.10.2012 Bulletin 2012/41**

(51) Int Cl.:
***C02F 1/44*** *(2006.01)* ***C02F 1/461*** *(2006.01)*

(21) Application number: **12155457.0**

(22) Date of filing: **14.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.04.2011 KR 20110032728**

(71) Applicants:
- **Samsung Electronics Co., Ltd.**
  **Suwon-si, Gyeonggi-do, 443-742 (KR)**
- **Nano Tec Co., Ltd.**
  **Bucheon-si, Gyeonggi-do (KR)**

(72) Inventors:
- **Kwak, Hyun-suk**
  **Gyeonggi-do (KR)**
- **Ko, Young-chul**
  **Gyeonggi-do (KR)**
- **Kim, Tae-gyu**
  **Gyeonggi-do (KR)**
- **Ahn, Jong-ho**
  **Incheon (KR)**
- **Kim, Bok-soo**
  **Seoul (KR)**

(74) Representative: **Robinson, Ian Michael**
**Appleyard Lees**
**15 Clare Road**
**Halifax HX1 2HY (GB)**

## (54) Apparatus and method for electrolytic production of reducing water

(57) An apparatus for producing electrolytic reducing water with excellent reducing ability and a pH that is maintained neutral by combining advantages of a conventional water purifier and a conventional alkaline ionized water device.



Printed by Jouve, 75001 PARIS (FR)

## Description

CROSS-REFERENCE TO RELATED APPLICATIONS

This application claims the benefit of Korean Patent Application No. 10-2011-0032728, filed on April 8, 2011, in the Korean Intellectual Property Office.

BACKGROUND

1. Field

The present invention relates to an apparatus for producing electrolytic reducing water, and more particularly, to an apparatus for producing electrolytic reducing water with excellent reducing ability and a pH that is maintained neutral.

2. Description of the Related Art

As water markets have gradually expanded along with economic growth, people obtain and drink water by using various methods. For example, conventionally, people obtain water from a mineral spring or drink boiled tap water. However, recently, people have begun using water purifiers, and furthermore, use alkaline ionized water devices for health promotion.

A reverse osmosis (RO) filter-type water purifier removes about 70% to about 90% of turbidity, germs, viruses, organic compounds, pesticides, heavy metals, disinfectant byproducts, inorganic ions, or the like, which are present in water, and purifies water to obtain drinkable water with a pH of about 5.8 to about 8.5, which corresponds to a neutral pH. To end this, three to five filters are installed in the RO filter-type purifier, and purified water is stored in a water tank.

Thus, a user may get cold water and hot water according to the user's taste. However, a water purifier needs not only to satisfy basic requirements of helping metabolism of the human body and quenching thirst, but also to purify water to have oxidizing power that is equal to or greater than that of tap water in terms of health indexes that are represented by oxidation reduction potential (ORP).

Thus, alkaline ionized water devices have been developed. An alkaline ionized water device is a medical appliance for producing water with a pH of 8.5 or more. The Korea Food & Drug Administration (KFDA) has approved the alkaline ionized water device to alleviate four stomach problems (chronic diarrhea, indigestion, abnormal fermentation, and hypergastric acidity), and also, medical fields have approved the alkaline ionized water device to alleviate various diseases such as intestinal diseases, blood vessel diseases, diabetes, and atopic dermatitis through clinical demonstration.

Recently, academies and papers have disclosed that an alkaline ionized water device has these effects due to purified water with reducing ability. However, since an alkaline ionized water device produces alkaline ion water through smooth electrolysis using ions dissolved in water as an electrolyte, there needs to be a sufficient amount of ions in the water, and the alkaline ionized water device requires a performance equivalent to a level of an ultrafiltration (UF) filter for satisfying general purifying requirements, rather than a level of a RO filter, in order to maintain the amount of ions. In addition, as amounts of a voltage and a current are increased in order to increase reducing ability of alkaline ion water, a pH of water is increased. Thus, water with high reducing ability is not drinkable.

SUMMARY

According to the present invention there is provided an apparatus and method as set forth in the appended claims. Other features of the invention will be apparent from the dependent claims, and the description which follows. Additional aspects and/or advantages will be set forth in part in the description which follows and, in part, will be apparent from the description, or may be learned by practice of the invention.

The present invention provides an apparatus for producing electrolytic reducing water with excellent reducing ability and a pH that is maintained neutral.

According to an aspect of the present invention, there is provided an apparatus for producing electrolytic reducing water including a reverse osmosis (RO) filter; and an electrolyzer for producing reducing water by electrolyzing water supplied from the RO filter, wherein the electrolyzer includes a cathode; an anode; and a cation-exchange resin positioned between the cathode and the anode, and cation-exchange layers are formed between the cathode and the cation-exchange resin, and between the cation-exchange resin and the anode, respectively.

BRIEF DESCRIPTION OF THE DRAWINGS

The above and other features and advantages of the present invention will become more apparent by describing in detail exemplary embodiments thereof with reference to the attached drawings in which:

FIG. 1 is a schematic diagram for describing a method of driving a conventional alkaline ionized water device;
FIGS. 2A and 2B are schematic diagrams for describing a method of driving an apparatus for producing electrolytic reducing water, according to an embodiment of the present invention;
FIG. 3 is a graph for describing pH and oxidation reduction potential (ORP) characteristics of reducing water that is generated in a cathode by electrolyzing water in an apparatus for producing electrolytic reducing water, according to an embodiment of the present invention;
FIG. 4 is a graph for describing pH and ORP characteristics of reducing water, along with an increase in an applied voltage, wherein the reducing water is generated in a cathode after passing water for three hours through an apparatus for producing electrolytic reducing water without any applied voltage, according to an embodiment of the present invention;
FIGS. 5A and 5B are diagrams for describing a method of regenerating a cation-exchange resin in an apparatus for producing electrolytic reducing water, according to an embodiment of the present invention;
FIGS. 6A and 6B are graphs for describing pH and ORP characteristics of reducing water that is generated in a cathode after electrodes are reversed in an apparatus for producing electrolytic reducing water, according to an embodiment of the present invention;
FIGS. 7A and 7B are diagrams for describing shapes of electrodes used in an apparatus for producing electrolytic reducing water, according to embodiments of the present invention;
FIGS. 8A and 8B are diagrams for describing structures of a cation-exchange resin, cation-exchange layers, and a cathode and anode of an apparatus for producing electrolytic reducing water, according to embodiments of the present invention; and
FIG. 9 is a schematic diagram for describing a method of driving an apparatus for producing electrolytic reducing water according to another embodiment of the present invention.

DETAILED DESCRIPTION

Reference will now be made in detail to the embodiments, examples of which are illustrated in the accompanying drawings, wherein like reference numerals refer to the like elements throughout. The embodiments are described below to explain the present invention by referring to the figures.

According to an embodiment of the present invention, an apparatus for producing electrolytic reducing water includes a reverse osmosis (RO) filter; and an electrolyzer for electrolyzing water supplied from the RO filter to obtain reducing water, wherein the electrolyzer includes a cathode; an anode; and a cation-exchange resin positioned between the cathode and the anode, and wherein cation-exchange layers are formed between the cathode and the cation-exchange resin, and between the anode and the cation-exchange resin, respectively.

The apparatus for producing electrolytic reducing water is obtained by combining advantages of a water purifier for producing water that is clean water without any heavy metals, organic materials, or inorganic ions but has no reducing ability, and advantages of an alkaline ionized water device for producing water that has reducing ability, but has a pH of 8.5 or more, which corresponds to alkalinity, and satisfies only basic requirements of removing free residual chlorine, chromaticity, turbidity, and chloroform. Thus, the apparatus for producing electrolytic reducing water may produce water that has a pH of about 5.8 to about 8.5, which corresponds to a neutral pH, is clean safe water without microorganisms, germs, residual chlorine, organic compounds, or pesticides, and has high reducing ability.

FIG. 1 is a schematic diagram for describing a method of driving a conventional alkaline ionized water device 1.

The conventional alkaline ionized water device 1 includes an ultrafiltration (UF) filter 11 and an electrolyzer 12. The electrolyzer 12 may include a cathode 13, an anode 14, and an ion-exchange layer 16 disposed between the cathode 13 and the anode 14.

While water passes through the UF filter 11, microorganisms such as viruses, particulate germs, and algal spores are removed from the water, but ions and particulate compounds whose sizes are smaller than the microorganisms pass through the UF filter 11. The purified water is put into the electrolyzer 12, and is dissociated by applying predetermined electrical energy to the purified water. The electrolysis that occurs in both the cathode 13 and the anode 14 may be represented by Reaction Scheme 1 below:

Reaction Scheme 1

Cathode (negative electrode): $2H_2O + 2e^- \rightarrow H_2 + 2OH^-$, $E^0=-0.828V$

Anode (positive electrode): $4H^{+}+O_2+4e^{-}$ -> $2H_2O$, $E^0$=+1.229V

In this case, oxidation reduction potential (ORP; relative potential with respect to a reference hydrogen electrode) of water generated in the cathode 13, as an electromotive force with respect to a reference hydrogen electrode, may be calculated according to Equation 1 below when it is assumed that only OH- and $H_2$ exist in the water:

$$E = 828 - \left(\frac{59}{n}\log\left(\frac{H_{2-\text{reference hydrogen electrode}}}{H_{2\text{-cathode}} \times (OH^{-})^{2}}\right)\right) \quad \ldots(1)$$

In Equation 1, n denotes the number of reacting electrons, $H_{2\text{-refernce}}$ hydrogen electrode and $H_2$-cathode denote a concentration (mol/L) of $H_2$ at a reference hydrogen electrode and a cathode, respectively, and, OH- denotes a concentration (mol/L) of $OH^-$.

In Equation 1, a voluntary reaction proceeds until E = $E^+$ - E- goes from a positive value to 0 mV. Since an electron moves from an indicator electrode to the reference hydrogen electrode, the ORP has a negative value, and in this case, water containing the indicator electrode exhibits reducing ability. If an electron moves from the reference hydrogen electrode to the indicator electrode, the ORP has a positive value, and in this case, the water containing the indicator electrode exhibits oxidizing ability.

According to Reaction Scheme 1, when E = $E^+$-$E^-$=1.229-(-0.828)=2.057 V is applied to both electrodes, introduced water may generate a hydrogen gas ($H_2$) and a hydroxyl group (OH-) at a cathode to exhibit alkalinity, and the ORP of Equation 1 may be reduced and may have a negative value. In addition, the water may generate an oxygen gas ($O_2$) and a hydrogen ion ($H^+$) at an anode to exhibit acidity, and the ORP of Equation 1 may have a positive value.

With regard to a conventional alkaline ionized water device, as a voltage applied to the conventional alkaline ionized water device is increased, a degree of alkalinity is increased, and the pH and reducing ability of electrolytic reducing water are increased. For example, an alkaline ionized water device approved by the Korean Food and Drug Administration (KFDA) is a second-level medical appliance, and since water produced by the alkaline ionized water device has a limited pH of about 8.5 to about 10, the ORP is -85 mV at a pH of 10. If the voltage applied to the conventional alkaline ionized water device is further increased, since an amount of $OH^-$ is increased in proportional to an amount of $H_2$ like in Reaction Scheme 1, non-drinkable water with an increased pH may be produced. Thus, there is a limit to maximizing reducing ability of electrolytic reducing water produced by the alkaline ionized water device since a pH of the water is excessively increased.

In addition, a reverse osmosis (RO) filter-type water purifier performs not only a basic purifying function of removing free residual chlorine, chromaticity, turbidity, microorganisms, and germs, but also a special purifying function of removing organic compounds, pesticides, heavy metals, and inorganic ion components, so as to produce pure water with an average conductivity of about 5 to about 15 μs/cm. Since general tap water has an average conductivity of about 200 to about 220 μs/cm, the conductivity of the water produced by the RO filter-type water purifier is about 1/15 to about 1/40 times the conductivity of the general tap water.

In order to electrolyze pure water corresponding to ionized water passing through a UF filter, energy equal to or greater than about 400 to about 500 V is required. In other words, since electrolysis efficiency is remarkably lowered, it is not realistic to configure an electrolysis system for producing pure water passing through a RO filter.

However, according to an embodiment of the present invention, an apparatus for producing electrolytic reducing water may produce water having excellent reducing ability and a pH corresponding to neutral pH by overcoming problems of the conventional water purifier and the alkaline ionized water device.

FIGS. 2A and 2B are schematic diagrams for describing a method of driving an apparatus for producing electrolytic reducing water 2, according to an embodiment of the present invention.

Referring to FIG. 2A, the apparatus for producing electrolytic reducing water 2 includes an electrolyzer 22 including a cathode 23 and an anode 24, for electrolysis, and a cation-exchange resin 26 positioned between the cathode 23 and the anode 24. Cation-exchange layers 25 and 25' are formed between the cathode 23 and the cation-exchange resin 26, and between the cation-exchange resin 26 and the anode 24, respectively. The electrolyzer 22 is configured so that pure water passing through a RO filter 21 may enter the cathode 23 and the cation-exchange resin 26. Like in Reaction Scheme 1, when a voltage of 2.057 V or more is applied to the electrolyzer 22, $H^+$ ions generated by electrolysis between the anode 24 and the cation-exchange layer 25' that is wet with water are transferred to the cathode 23 by using the cation-exchange resin 26 as a catalyst. In addition, according to Reaction Scheme 2, neutralization reaction occurs between the transferred $H^+$ ions and $OH^-$so that a pH of reducing water generated in the cathode 23 may not be increased.

Reaction Scheme 2

OH- (which is generated in a cathode) + $H^+$ (which is transferred from an anode and a cation-exchange resin) $\rightarrow$ $H_2O$ (which is neutral water)

Thus, the reducing water may have reducing ability since the ORP has a negative value in a neutral region with a pH of about 5.8 to about 8.5 due to $H_2$ generated in the cathode 23.

In more detail, as shown in FIG. 2B, when water passing through the RO filter 21 is introduced into the electrolyzer 22, and a voltage is applied to the electrolyzer 22 so that a predetermined current may flow in the electrolyzer 22, the cation-exchange layer 25' adjacent to the anode 24 is wet with water entering the cation-exchange resin 26 so that the water is dissociated between surfaces of the cation-exchange layer 25' and the anode 24 to generate $H^+$ and $O_2$. Since $O_2$ generated in the anode 24 has a size of about 3.4 Å, $O_2$ is discharged outwards through water introduced into the cation-exchange resin 26 rather than being introduced into the cathode 23 through the cation-exchange layer 25. If the water introduced into the cation-exchange resin 26 does not flow and stays in the electrolyzer 22, a concentration of dissolved $O_2$ is increased so that the cation-exchange resin 26 is oxidized, thereby reducing lifespan of an apparatus. In addition, heat ($Q \propto W=I^2R$) generated during electrolysis is not discharged, and thus lifespan of a cation-exchange layer and a lifespan of the cation-exchange resin 26 may be reduced. Water molecules are generated by combing $H^+$ generated in the anode 24 and $OH^-$ generated in the cathode 23, and thus although reducing ability of reducing water is increased by an amount of generated $H_2$ according to an increased current, a pH of the reducing water may not be increased.

The electrolyzer 22 may further include a power source unit (not shown) for applying a voltage thereto. However, it is also understood that the power source unit is a separated unit from the electrolyzer 22.

The cation-exchange resin 26 may be $H^+$-type cation-exchange resin. For example, if the cation-exchange resin 26 is resin obtained by bonding a $SO_3H$ exchange group to a surface of polymer, when the cation-exchange resin is put into water, $H^+$ ions are smoothly dissociated from a surface of the cation-exchange resin 26 while acidifying water until the $H^+$ ions and $H^+$ ions in water are in equilibrium.

The cation-exchange resin 26 may be put into a container having, for example, a rectangular-frame shape, and may be positioned between the cathode 23 and the anode 24. In pure water, $H^+$ generated in an anode is not moved to a cathode by energy generated due to a voltage difference. However, $H^+$ ions may be transferred from the anode to the cathode by using, as a medium, $H^+$ ions that are dissociated from the cation-exchange resin 26, and thus a current may flow along an imaginary closed loop even at a low voltage according to a lifespan of the cation-exchange resin.

FIG. 3 is a graph for describing pH and ORP characteristics of reducing water that is generated in a cathode by electrolyzing water in an apparatus for producing electrolytic reducing water, according to an embodiment of the present invention. Source water is obtained by passing water through a UF filter and a RO filter. With regard to an alkaline ionized water device, along with an increase in an applied voltage, a pH of water produced by the alkaline ionized water device is increased to about 8.5 to about 9.5 or more without big increase from an ORP of -150 mV. However, with regard to the apparatus for producing electrolytic reducing water according to the present embodiment, the ORP of the water produced by the apparatus is increased to -500 mV, but a pH of the water is not largely changed between about 7 to about 7.5, and has a stable value.

When water continually passes through a cation-exchange resin, $H^+$ ions are consumed from a surface of the cation-exchange resin. Thus, it is unavoidable that performance of the cation-exchange resin is reduced since $H^+$ ions by themselves generated at a low current are unable to regenerate an ion-exchange resin although water passes without being electrolyzed or water is electrolyzed.

FIG. 4 is a graph for describing pH and ORP characteristics of reducing water, along with an increase in an applied voltage, wherein the reducing water is generated in a cathode after passing water for three hours through an apparatus for producing electrolytic reducing water without any applied voltage, according to an embodiment of the present invention. As shown in FIG. 4, if an ORP is -500 mV or more, a pH is maintained to correspond to neutral pH in the presence of a sufficient amount of $-SO_3H$ as a functional group bonded to a surface of an ion-exchange resin in an electrolyzer. However, with regard to the reducing water generated after passing water for three hours, since an efficiency of dissociating $H^+$ of a cation-exchange resin is reduced, a neutralization reaction for neutralizing $OH^-$ generated in the cathode occurs decreasingly, and thus a pH of the reducing water is increased to 8.7 or more.

Conventionally, in order to regenerate an $H^{+-}$ type cation-exchange resin, a resin_is immersed in an HCl solution for a predetermined period of time, a surface of the resin is restored to have a form of $-SO_3H$ by using an excessive amount of $H^+$ ions that exist in water. However, due to the structural characteristics of the electrolyzer of the apparatus for producing electrolytic reducing water according to the present embodiment, the cation-exchange resin contained in the electrolyzer may not be regenerated by using a chemical method using an HCl solution. Thus, the cation-exchange resin may be regenerated by using $H^+$ ions generated by electrolysis.

FIGS. 5A and 5B are diagrams for describing a method of regenerating a cation-exchange resin 56 in an apparatus for producing electrolytic reducing water, according to an embodiment of the present invention.

As shown in FIGS. 5A and 5B, since $H^+$ ions that are generated in an anode 54 by electrolysis are transferred to a cation-exchange layer 55' and the cation-exchange resin 56, an amount of $H^+$ ions of the cation-exchange resin 56 adjacent to the anode 54 and the cation-exchange layer 55' is higher than that in equilibrium, and so, the cation-exchange resin 56 is partially regenerated. Thus, after a predetermined amount of water is electrolyzed, by reversing (or switching) polarities of the anode 54 and the cathode 53 of an electrolyzer 52 that is symmetrically configured, and alternately introducing water to the anode 53 and the cathode 54 of the electrolyzer 52, the cation-exchange resin 56 may function as a catalyst for transferring $H^+$ ions, and simultaneously may be regenerated so as to continuously produce neutral reducing water. In addition, by reversing a water flow, an ion-exchange layer may be prevented from being polluted if water flows in one direction only. The reversing polarities of the anode 54 and the cathode 53 is performed by a switch 57 connected to a power source unit 58.

That is, the cathode 53 of FIG. 5A is reversed to an anode 53' of FIG. 5B, and the anode 54 of FIG. 5A is reversed to a cathode 54' of FIG. 5B. Thus, in FIG. 5B, water passing through a RO filter 51 is introduced into the cathode 54' and the cation-exchange resin 56. Since the electrolyzer 52 is symmetrical with respect to the cation-exchange resin 56, the cathode 53 and the anode 54 may be reversed according to their polarities.

FIGS. 6A and 6B are graphs for describing pH and ORP characteristics of reducing water that is generated in a cathode after electrodes are reversed in an apparatus for producing electrolytic reducing water, according to an embodiment of the present invention.

FIG. 6A shows a pH of reducing water according to a reduction in performance of a cation-exchange resin while a predetermined amount of water flows. As shown in FIG. 6A, as time passes, a pH of water generated in a cathode is increased due to a reduction in performance of the cation-exchange resin. As shown in FIG. 6B, when electrodes are reversed, and water flows are changed, a pH is restored to a pH corresponding to neutral pH, and ORP is maintained at -500 mV or more.

According to embodiments of the present invention, a cathode and an anode of an electrolyzer may each be configured so as to have holes through which water passes at predetermined intervals (refer to FIG. 7A), or alternatively, in order to increase a surface area, the cathode and the anode may be configured to be of a mesh type (refer to FIG. 7B), thereby increasing electrolysis efficiency. The cathode and the anode may be formed of titanium (Ti) that is biologically safe, and may be coated with platinum (Pt) that is not ionized by an applied voltage, has excellent conductivity, and is also biologically safe.

In an apparatus for producing electrolytic reducing water according to an embodiment of the present invention, a cathode, a cation-exchange layer, and cation-exchange resin may be closely attached to each other, and the cation-exchange resin, a cation-exchange layer, and an anode may be closely attached to each other. FIGS. 8A and 8B are diagrams for describing structures of a cation-exchange resin 86, cation-exchange layers 85 and 85', and cathode and anode 83 and 84 of an apparatus for producing electrolytic reducing water, according to embodiments of the present invention. As shown in FIG. 8A, if the cation-exchange layers 85 and 85' are spaced apart from the cathode and anode 83 and 84, respectively, an efficiency of transferring $H^+$ ions generated in the anode 84 to the cation-exchange layer 85' and the cation-exchange resin 86 may be reduced, thereby reducing an efficiency of neutralizing a pH of water at the cathode 83. Thus, as shown in FIG. 8B, the cation-exchange resin 86, the cation-exchange layers 85 and 85', and the cathode and anode 83 and 84 may be closely attached to each other.

Like in FIGS. 2A and 2B, water introduced to an electrolyzer of an apparatus for producing electrolytic reducing water may be supplied to the cathode 23 and the cation-exchange resin 26.

Water introduced to the cathode 23 may be used to produce reducing water by generating hydrogen gases and OH- ions through a reduction reaction of water. Water introduced to the cation-exchange resin 26 prevents oxygen gases generated in the anode 24 from penetrating into the cathode 23 through the cation-exchange layer 25', and also prevents heat from being generated due to an operation of the electrolyzer, thereby preventing the cation-exchange resin and a cation-exchange layer from deteriorating.

According to an embodiment of the present invention, the amount of water passing through a RO filter is about 0.1 L/m at 3kgf/$cm^2$ to about 0.29L/m at 7.5kgf/$cm^2$. If it is assumed that a water purifier is used at an average pressure of 5kgf/$cm^2$, since the amount of water is about 0.2L/m, it is determined that the amount of water is not high. Thus, the amount of water introduced to the cation-exchange resin is minimized, and the remaining water may be introduced to a cathode in order to produce electrolytic reducing water.

FIG. 9 is a schematic diagram for describing a method of driving an apparatus for producing electrolytic reducing water according to another embodiment of the present invention.

As shown in FIG. 9, water may be introduced not only to a cathode 93 and cation-exchange resin 96, but also to an anode 94. However, water discharged from the cation-exchange resin 96 and the anode 94 is non-drinkable and is discarded. Thus, since it is inefficient to introduce water to the anode 94, and a pressure applied to a RO filter 91 needs to be increased so as to increase the amount of water in order to introduce water to the anode 94, lifespan of the RO filter 91 may be adversely affected.

According to the above-described embodiments of the present invention, an apparatus for producing electrolytic reducing water may produce reducing water with a pH of about 5.8 to about 8.5, which corresponds to neutral pH by combining advantages of water purifiers and an alkaline ionized water device, and thus the apparatus for producing electrolytic reducing water may enter water-purifier markets and medical-appliance markets. In addition, the apparatus may be applied to dispensers of refrigerators for home or business or to interior humidifiers. Furthermore, since reducing water produced by the apparatus may have a maximized amount of dissolved $H_2$ and may have water molecules that are dissociated into small pieces, the reducing water is highly activated reducing water, and thus, may be applied in various ways in the health, beauty care and agricultural industries.

According to the above-described embodiments of the present invention, an apparatus for producing electrolytic reducing water may produce water with excellent reducing ability and a pH that is maintained neutral.

Although a few preferred embodiments have been shown and described, it will be appreciated by those skilled in the art that various changes and modifications might be made without departing from the scope of the invention, as defined in the appended claims.

## Claims

1. An apparatus for producing electrolytic reducing water comprising:

   a reverse osmosis (RO) filter; and
   an electrolyzer for producing reducing water by electrolyzing water supplied from the RO filter,
   wherein the electrolyzer comprises a cathode; an anode; and cation-exchange resin positioned between the cathode and the anode, and
   wherein cation-exchange layers are formed between the cathode and the cation-exchange resin, and between the cation-exchange resin and the anode, respectively.

2. The apparatus for producing electrolytic reducing water of claim 1, wherein the cation-exchange resin is a $H^+$-type cation-exchange resin.

3. The apparatus for producing electrolytic reducing water of claim 1, wherein the cathode, the cation-exchange layer, and the cation-exchange resin are closely attached to each other, and the cation-exchange resin, the cation-exchange layer, and the anode are closely attached to each other.

4. The apparatus for producing electrolytic reducing water of claim 1, wherein the cathode and the anode are each configured so as to have holes through which water passes.

5. The apparatus for producing electrolytic reducing water of claim 1, wherein the cathode and the anode are each configured to be of a mesh type.

6. The apparatus for producing electrolytic reducing water of claim 1, wherein water supplied to the electrolyzer is supplied to the cathode and the cation-exchange resin.

7. The apparatus for producing electrolytic reducing water of claim 1, wherein the cation-exchange resin is regenerated by reversing (switching) polarities of the cathode and the anode.

8. The apparatus for producing electrolytic reducing water of claim 1, further comprising a power source unit for applying a voltage to the electrolyzer.

9. The apparatus for producing electrolytic reducing water of claim 1, further comprising a switch to switch polarities of the cathode and anode.

10. The apparatus of claim 1, wherein the cathode and/or the anode are formed of titanium.

11. The apparatus of claim 1, wherein the cathode and/or the anode are coated with platinum.

12. A method for supplying power to an apparatus for producing electrolytic reducing water of claim 1, the method comprising:

    supplying "+" polarity to the anode and "-" polarity to the cathode; and

switching polarities of the anode and the cathode to continuously produce neutral reducing water.

FIG. 1

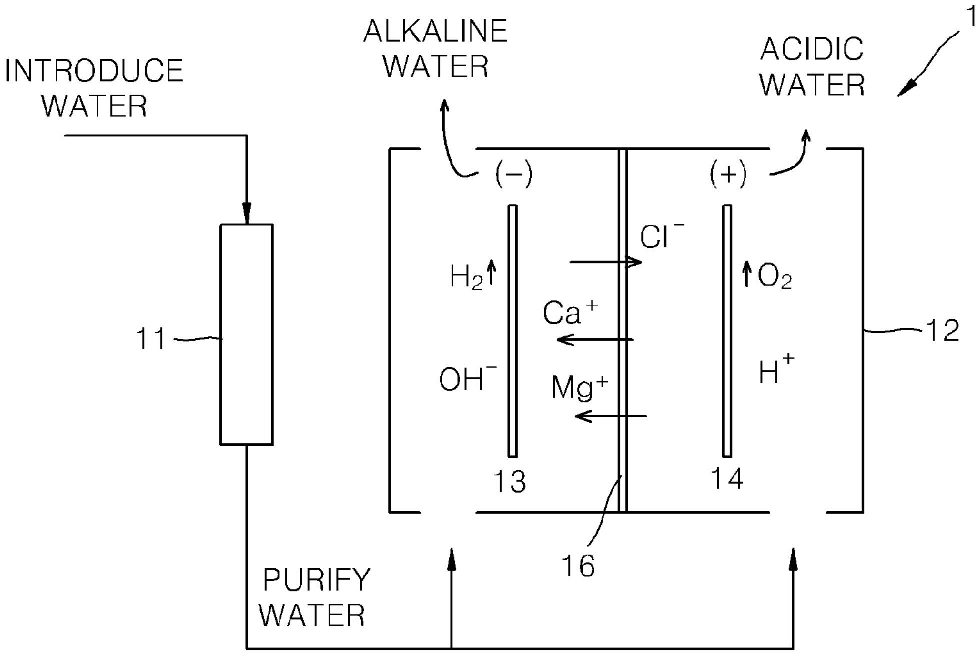
INTRODUCE WATER
ALKALINE WATER
ACIDIC WATER
1
(−)
(+)
Cl⁻
H2
O2
Ca+
12
11
OH⁻
Mg+
H+
13
14
16
PURIFY WATER

FIG. 2A

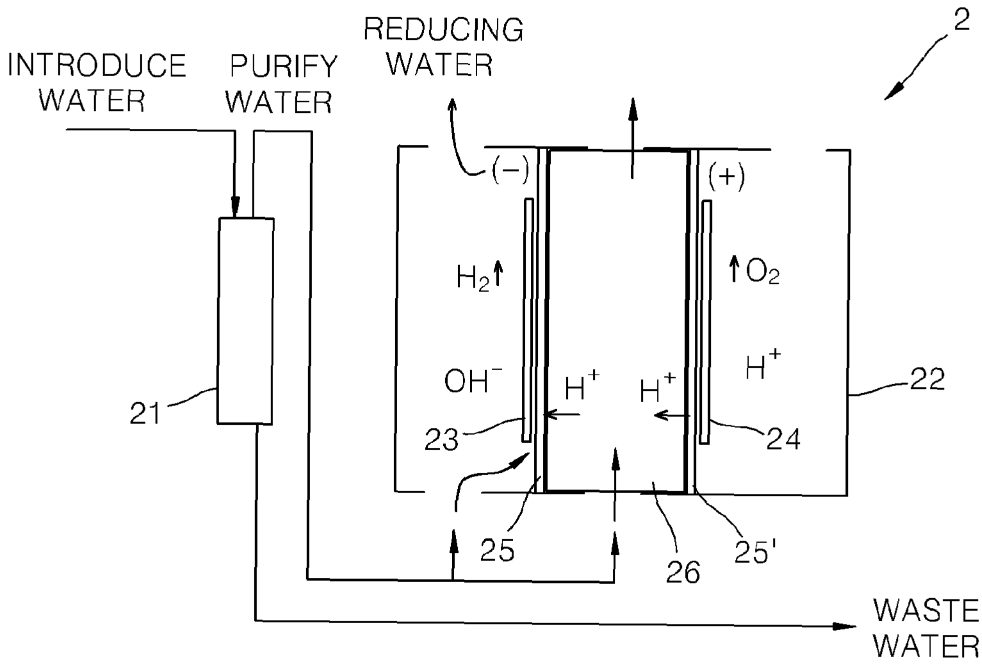
REDUCING WATER
INTRODUCE WATER
PURIFY WATER
2
(−)
(+)
$H_2$↑
↑$O_2$
$OH^-$
$H^+$
$H^+$
$H^+$
21
22
23
24
25
26
25'
WASTE WATER

FIG. 2B

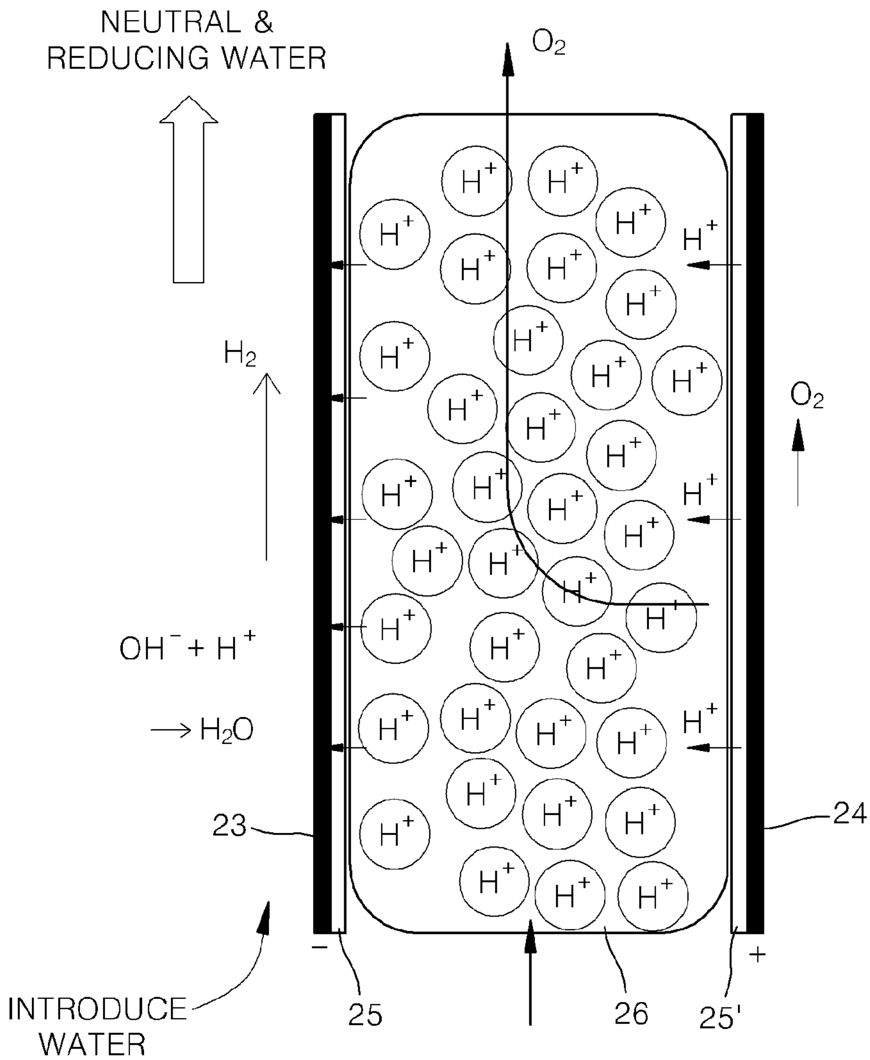
NEUTRAL &
REDUCING WATER
$O_2$
$H^+$
$H_2$
$O_2$
$OH^- + H^+$
$\rightarrow H_2O$
23
24
−
+
INTRODUCE
WATER
25
26
25'

FIG. 3

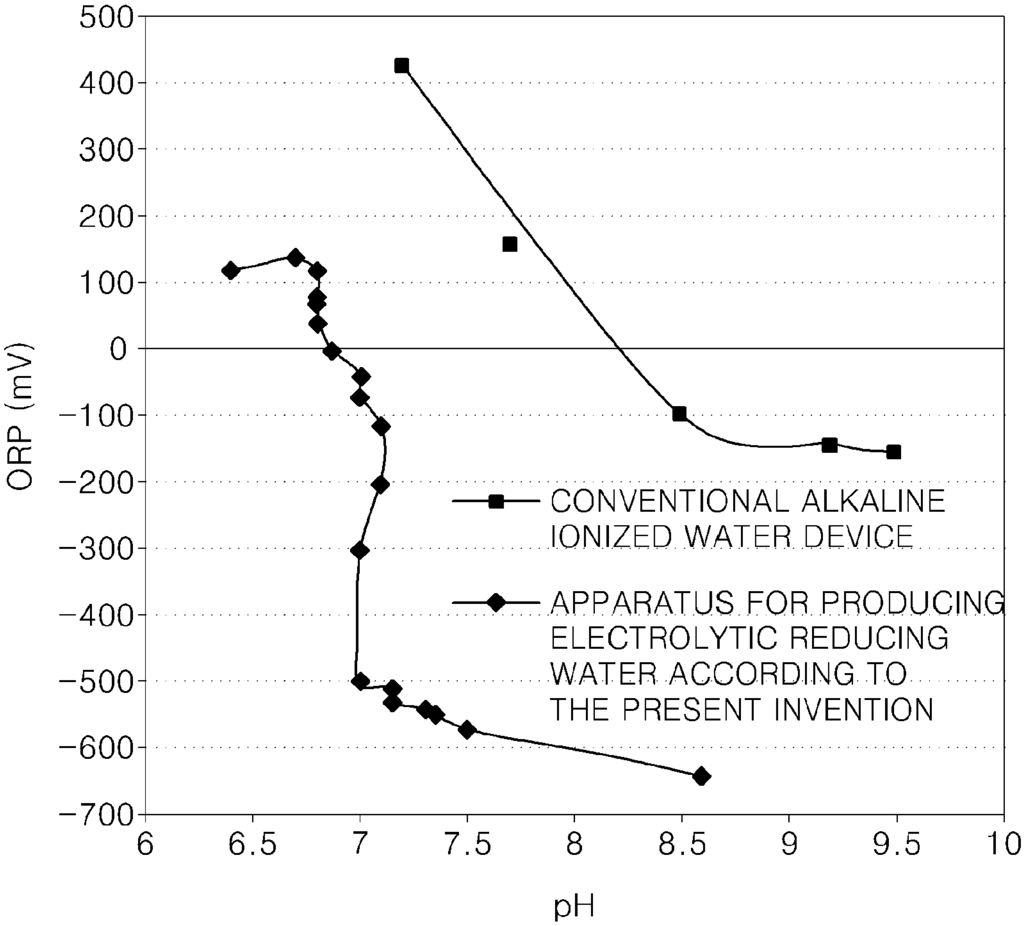

500
400
300
200
100
0
−100
−200
−300
−400
−500
−600
−700
ORP (mV)
6
6.5
7
7.5
8
8.5
9
9.5
10
pH
CONVENTIONAL ALKALINE IONIZED WATER DEVICE
APPARATUS FOR PRODUCING ELECTROLYTIC REDUCING WATER ACCORDING TO THE PRESENT INVENTION

FIG. 4

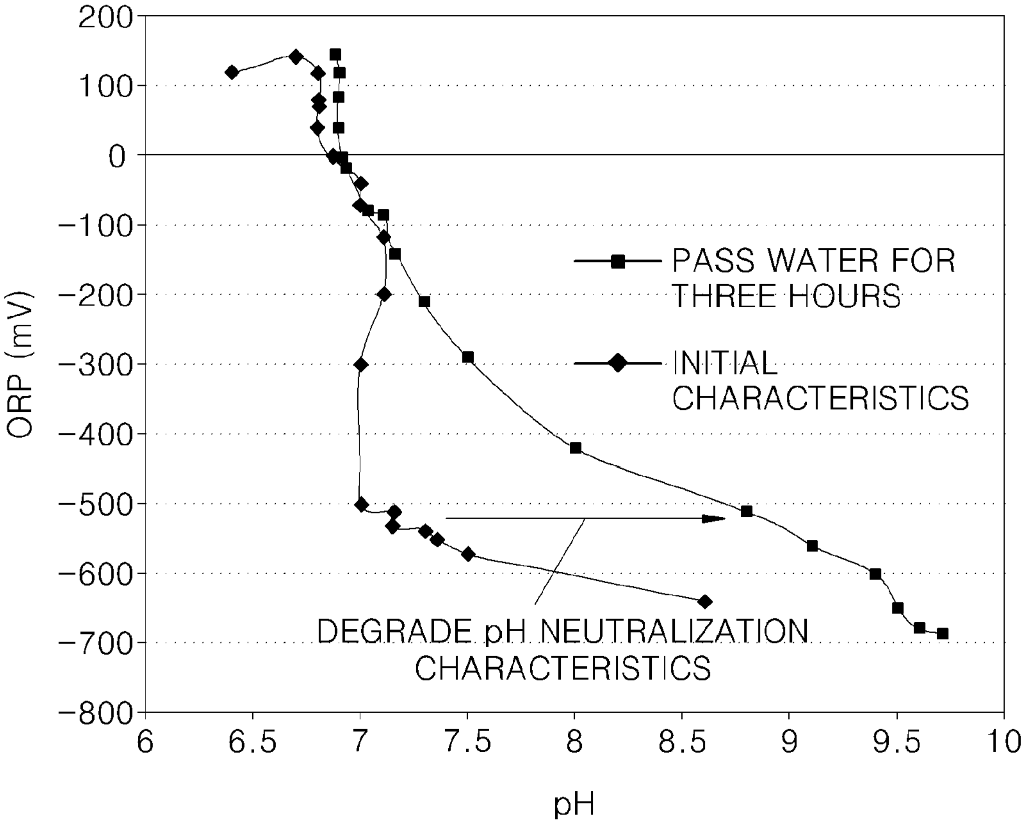
200
100
0
−100
−200
−300
−400
−500
−600
−700
−800
ORP (mV)
6
6.5
7
7.5
8
8.5
9
9.5
10
pH
PASS WATER FOR THREE HOURS
INITIAL CHARACTERISTICS
DEGRADE pH NEUTRALIZATION CHARACTERISTICS

FIG. 5A

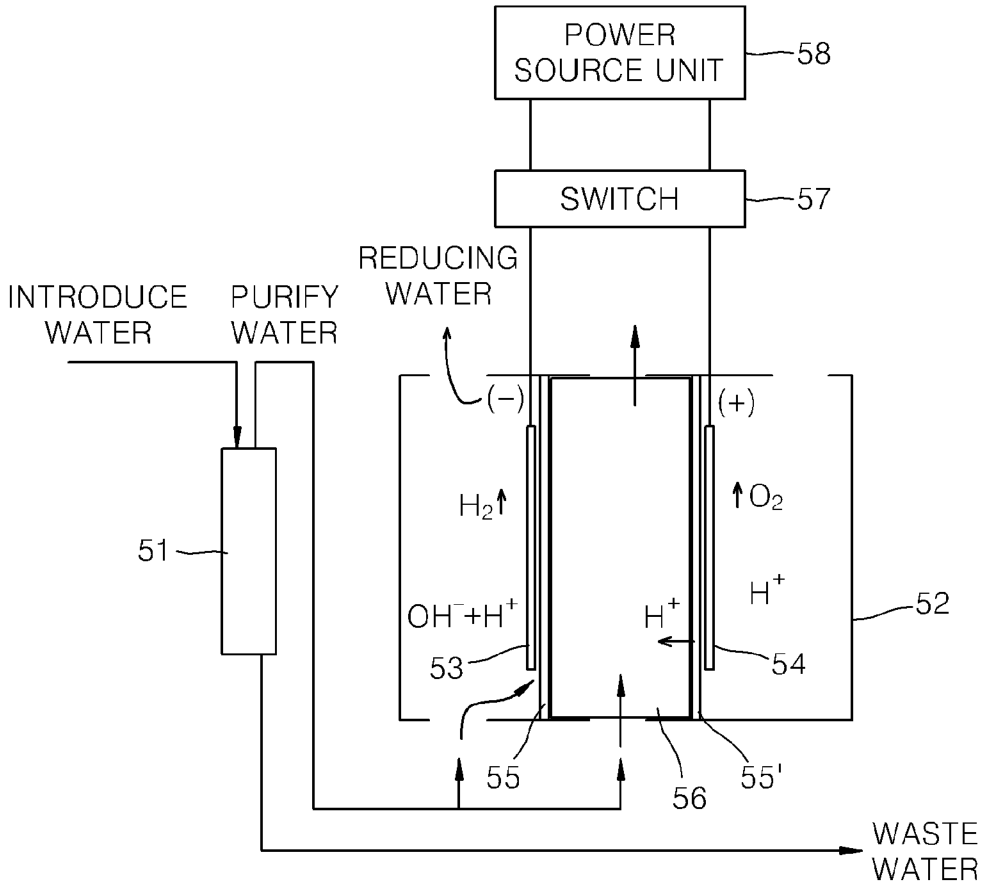
POWER SOURCE UNIT
58
SWITCH
57
REDUCING WATER
INTRODUCE WATER
PURIFY WATER
(−)
(+)
$H_2$
$O_2$
51
$H^+$
52
$OH^-+H^+$
$H^+$
53
54
55
56
55'
WASTE WATER

FIG. 5B

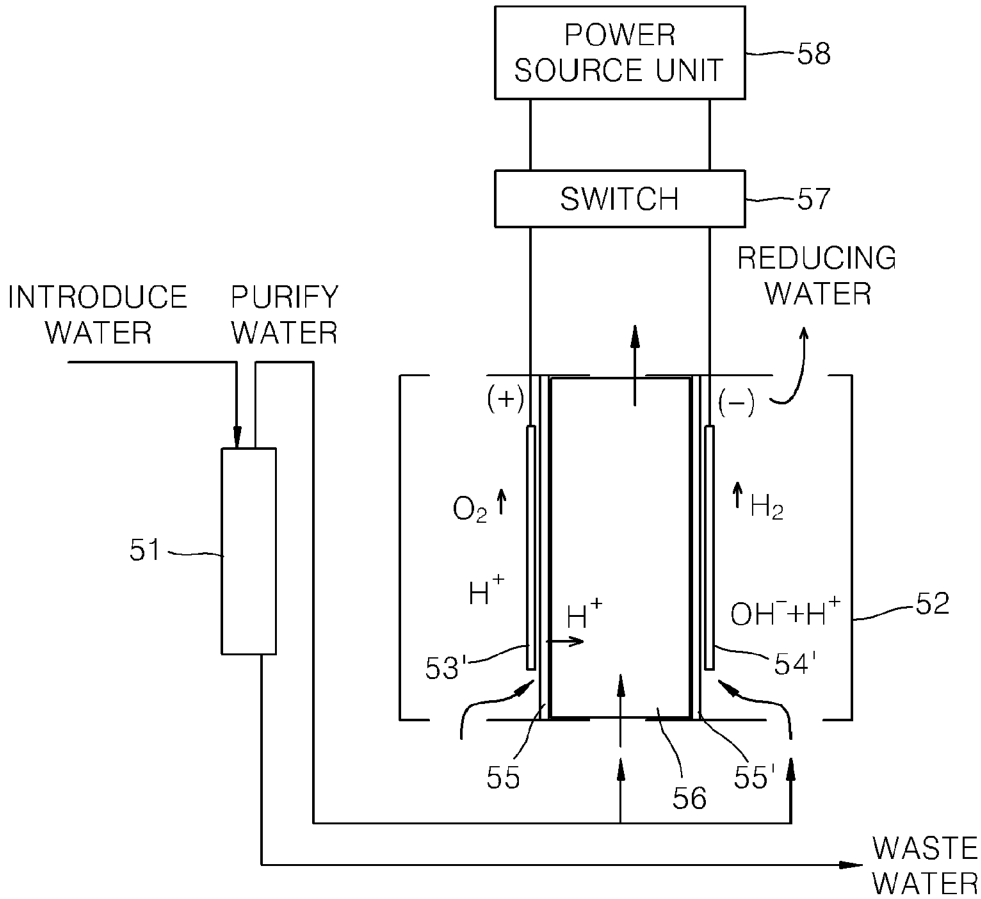
POWER
SOURCE UNIT
58
SWITCH
57
REDUCING
WATER
INTRODUCE
WATER
PURIFY
WATER
(+)
(−)
$O_2$
$H_2$
51
$H^+$
$H^+$
$OH^- + H^+$
52
53'
54'
55
56
55'
WASTE
WATER

# FIG. 6A

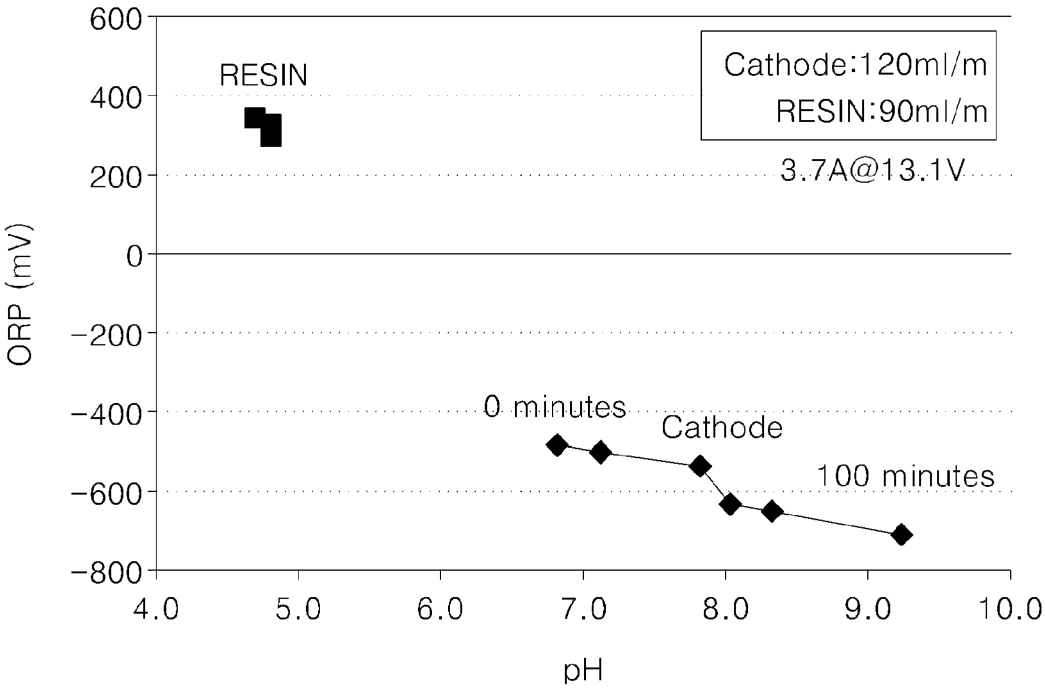

600
400
200
0
−200
−400
−600
−800
ORP (mV)
4.0
5.0
6.0
7.0
8.0
9.0
10.0
pH
RESIN
Cathode:120ml/m
RESIN:90ml/m
3.7A@13.1V
0 minutes
Cathode
100 minutes

FIG. 6B

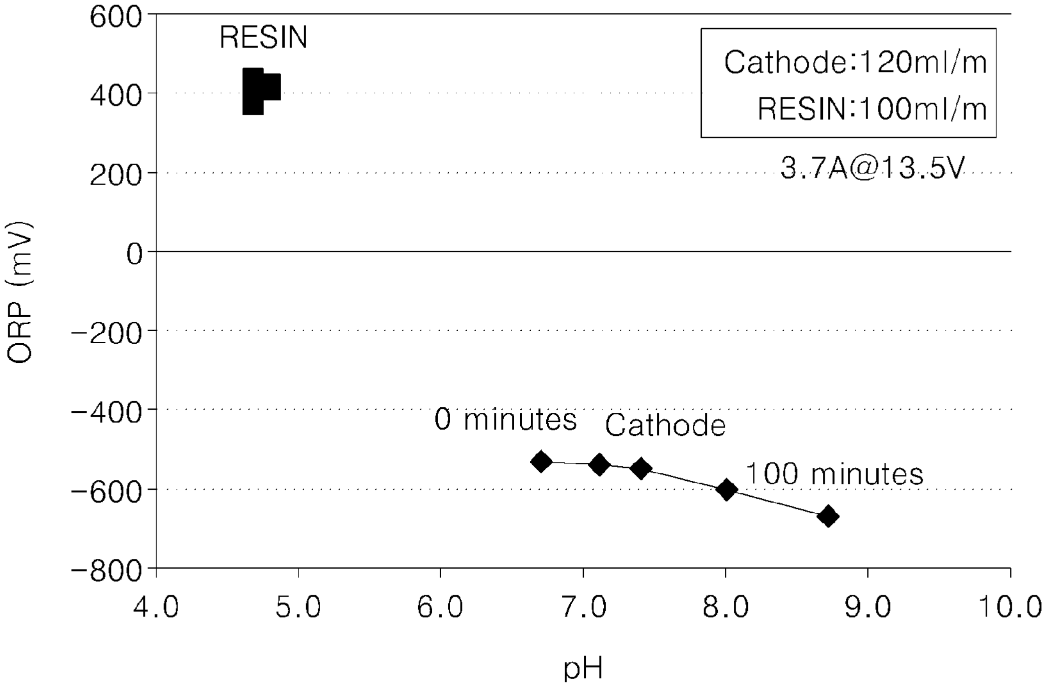
RESIN
Cathode:120ml/m
RESIN:100ml/m
3.7A@13.5V
600
400
200
0
−200
−400
−600
−800
ORP (mV)
0 minutes
Cathode
100 minutes
4.0
5.0
6.0
7.0
8.0
9.0
10.0
pH

FIG. 7A

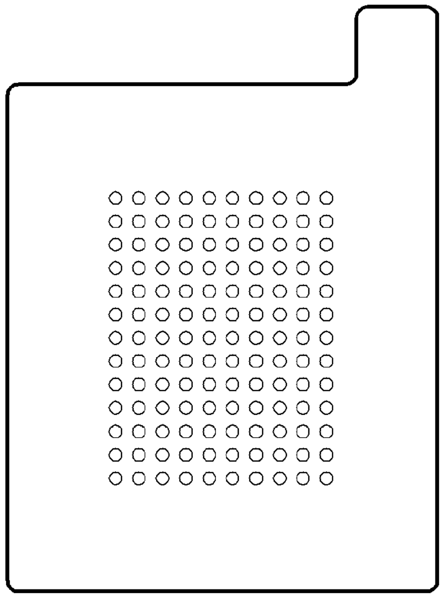

FIG. 7B

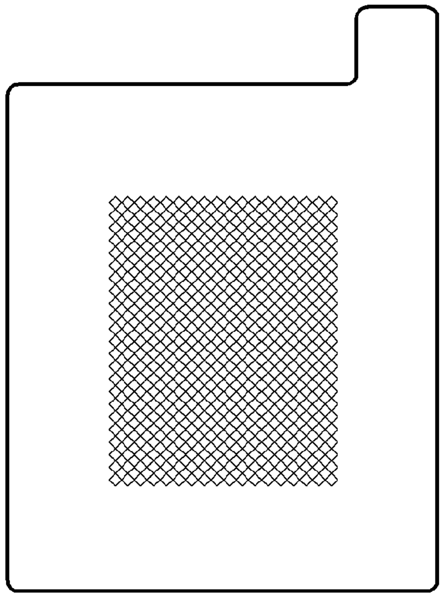

FIG. 8A

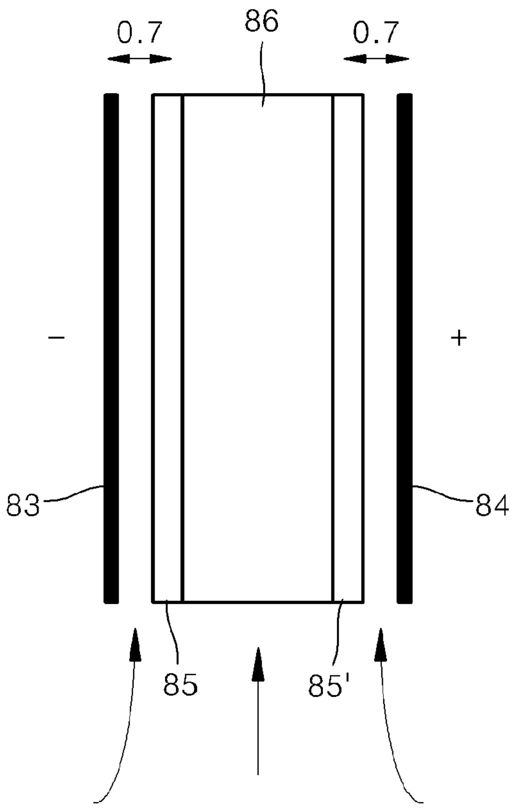

FIG. 8B

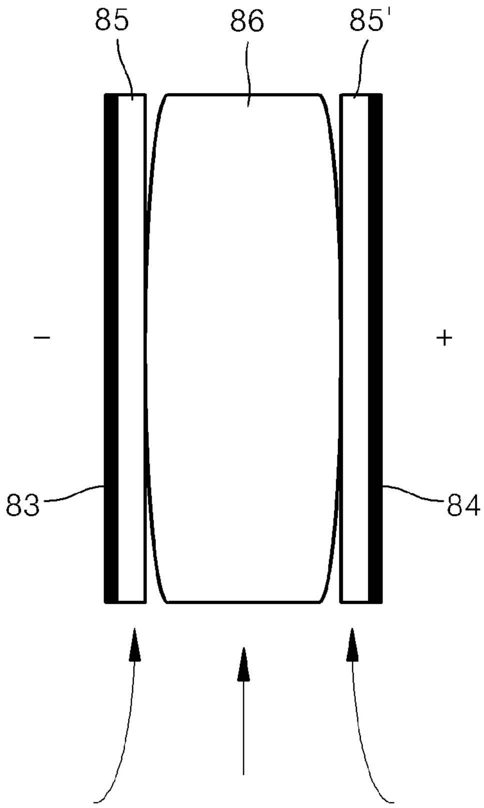

FIG. 9

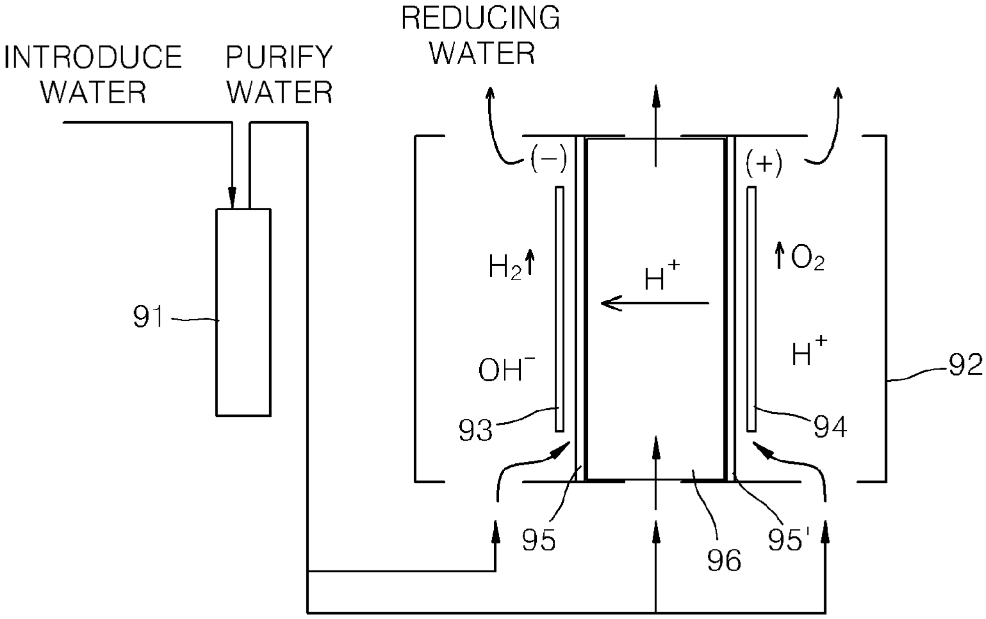
REDUCING
WATER
INTRODUCE
WATER
PURIFY
WATER
(−)
(+)
H2
H+
O2
91
H+
OH−
92
93
94
95
96
95'

Europäisches Patentamt
European Patent Office
Office européen des brevets

# EUROPEAN SEARCH REPORT

Application Number
EP 12 15 5457

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 299454 A (ORGANO KK) 14 November 1995 (1995-11-14) * paragraph [0017] - paragraph [0029]; figures 1,3 * | 1-12 | INV. C02F1/44 C02F1/461 |
| A | JP 2008 100175 A (ORGANO KK) 1 May 2008 (2008-05-01) * the whole document * | 1-12 | |
| A | US 2005/139808 A1 (ALIMI HOJI [US]) 30 June 2005 (2005-06-30) * the whole document * | 1-12 | |
| A | US 2004/118775 A1 (MUROTA WATARU [JP] ET AL) 24 June 2004 (2004-06-24) * the whole document * | 1-12 | |

TECHNICAL FIELDS SEARCHED (IPC)

C02F

The present search report has been drawn up for all claims

| Place of search | Date of completion of the search | Examiner |
|---|---|---|
| The Hague | 14 June 2012 | Liebig, Thomas |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 12 15 5457

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2012

| Patent document cited in search report | Publication date | Patent family member(s) | Publication date |
|---|---|---|---|
| JP 7299454 A | 14-11-1995 | JP 3137831 B2 | 26-02-2001 |
| | | JP 7299454 A | 14-11-1995 |
| JP 2008100175 A | 01-05-2008 | JP 4896657 B2 | 14-03-2012 |
| | | JP 2008100175 A | 01-05-2008 |
| US 2005139808 A1 | 30-06-2005 | AU 2011200390 A1 | 17-02-2011 |
| | | CN 1845877 A | 11-10-2006 |
| | | EP 2330081 A2 | 08-06-2011 |
| | | US 2005139808 A1 | 30-06-2005 |
| US 2004118775 A1 | 24-06-2004 | AU 2003241793 A1 | 23-06-2004 |
| | | CA 2507903 A1 | 17-06-2004 |
| | | EP 1568661 A1 | 31-08-2005 |
| | | JP 2004230370 A | 19-08-2004 |
| | | KR 20050084102 A | 26-08-2005 |
| | | US 2004118775 A1 | 24-06-2004 |
| | | WO 2004050563 A1 | 17-06-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020110032728